Europäisches Patentamt

European Patent Office

Office européen des brevets

(19)

(11) EP 1 602 629 A1

(12) EUROPEAN PATENT APPLICATION
published in accordance with Art. 158(3) EPC

(43) Date of publication:
07.12.2005 Bulletin 2005/49

(51) Int Cl.⁷: C02F 1/461, C02F 1/467

(21) Application number: 04716791.1

(86) International application number:
PCT/JP2004/002639

(22) Date of filing: 03.03.2004

(87) International publication number:
WO 2004/080901 (23.09.2004 Gazette 2004/39)

(84) Designated Contracting States:
AT BE BG CH CY CZ DE DK EE ES FI FR GB GR
HU IE IT LI LU MC NL PL PT RO SE SI SK TR
Designated Extension States:
AL LT LV MK

(30) Priority: 11.03.2003 JP 2003064484

(71) Applicants:
• MIKUNI CORPORATION
Chiyoda-ku, Tokyo 101-0021 (JP)

• Hanaoka, Kokichi
Ueda-shi, Nagano 386-0001 (JP)

(72) Inventor: HANAOKA, Kokichi
Ueda-shi, Nagano 386-0001 (JP)

(74) Representative: Ziebig, Marlene et al
Anwaltskanzlei
Gulde Hengelhaupt Ziebig & Schneider
Wallstrasse 58/59
10179 Berlin (DE)

(54) PROCESS FOR PRODUCING MIXED ELECTROLYTIC WATER

(57)    The invention illustrates a method for producing mixed electrolyzed water of cathode-side electrolyzed water and anode-side electrolyzed water by supplying an aqueous electrolytic solution that contains a chloride salt and an inorganic acid to a non-diaphragm electrolytic cell that has at least a pair of inert electrodes having an electrode-to-electrode distance of at most 2 mm, and electrolyzing it, which is **characterized in that** the polarity of the electric power to be supplied between at least the pair of inert electrodes is alternated at least 2 times or more per minute.

Fig. 1

EP 1 602 629 A1

## Description

TECHNICAL FIELD

The present invention relates to a method for producing mixed electrolyzed water, a mixture of anode-side electrolyzed water and cathode-side electrolyzed water that has an increased microbicidal activity.

BACKGROUND ART

A technique is well known, which comprises electrolyzing a diluted aqueous solution of an electrolyte such as an alkali metal chloride in an electrolytic cell with inert electrodes of platinum, platinum alloy or the like disposed via a diaphragm inside it, taking out the anode-side electrolyzed water (acid water) of low pH that is electrolytically produced on the anode side, and using it for sterilization or disinfection. For the diaphragm, used are charged membranes of filmy ion-exchanged resin, or non-charged membranes having a microporous structure.

Hypochlorous acid is formed in the anode-side electrolyzed water, and the anode-side electrolyzed water is utilized for sterilization or disinfection based on the strong oxidizing reaction and chlorinating reaction of hypochlorous acid. The mode of utilizing it in that manner is popular in medical facilities, etc.

Minor ozone and dissolved oxygen in the anode-side electrolyzed water have the ability to promote granulation, and therefore utilizing the electrolyzed water as an assistant in surgical therapy is now under study.

On the other hand, cathode-side electrolyzed water (alkali water) that is formed on the cathode side is obtained through electrolysis of tap water in place of the diluted electrolytic solution, and it has heretofore been utilized for drinking water, etc.

A method for producing microbicidal water is known, which comprises mixing sodium chloride-containing water and hydrochloric acid-containing water, then electrolyzing the resulting mixture in a non-diaphragm electrolytic cell, and diluting the resulting electrolyzed water with water to make it have a controlled residual chlorine concentration of from 1. 0 to 2000 ppm and a controlled pH of from 3 to 7 (Patent 2 , 627 , 100 (claim 1)) . It is said that microbicidal water with hypochlorous acid of high microbicidal activity therein can be safely produced in a simple device according to the method. In the food industry and others, however, still desired is a method of producing microbicidal water having a further stronger microbicidal activity in a simple device.

DISCLOSURE OF THE INVENTION

We, the present inventors have assiduously studied to solve the above-mentioned problems, and, as a result, have found that, when an aqueous solution of an acidic electrolyte with a chloride salt added thereto is electrolyzed in an electrolytic cell with the distance between the inert electrodes therein kept at most 2 mm, then the anode-side electrolyzed water and the cathode-side electrolyzed water are efficiently mixed and oxygen formed on the anode side rapidly reacts with hydrogen formed on the cathode side to form water. In addition, we have further found that, when sodium hypochlorite formed is further electrolyzed, then dissociation of water and hypochlorous acid is enhanced and electrolyzed water having an increased microbicidal activity can be obtained. According to the production method, the mixed electrolyzed water can be produced efficiently with no discharge of waste liquid, and the method is an ideal method for producing electrolyzed water.

On the basis of the above-mentioned findings, we have completed the present invention. Accordingly, an object of the invention is to provide a method for producing mixed electrolyzed water that has an increased microbicidal activity, etc.

The invention is described below.

[1] A method for producing mixed electrolyzed water of cathode-side electrolyzed water and anode-side electrolyzed water by supplying an aqueous electrolytic solution that contains a chloride salt and an inorganic acid to a non-diaphragm electrolytic cell that has at least a pair of inert electrodes having an electrode-to-electrode distance of at most 2 mm, and electrolyzing it, which is characterized in that the polarity of the electric power to be supplied between at least the pair of inert electrodes is alternated at least 2 times or more per minute.

[2] The method for producing mixed electrolyzed water of [1], wherein the chloride salt is sodium chloride, potassium chloride, calcium chloride or magnesium chloride.

[3] The method for producing mixed electrolyzed water of [1], wherein the inorganic acid is hydrochloric acid, sulfuric acid, nitric acid or phosphoric acid.

In the invention, an aqueous electrolytic solution containing a chloride salt and an inorganic acid is electrolyzed, and the resulting anode- side electrolyzed water and cathode-side electrolyzed water are mixed. Therefore, the mixed electrolyzed water obtained herein has good microbicidal activity and antimicrobial activity.

The mixed electrolyzed water is useful in various applications such as sterilization or disinfection, granulation, health support, cosmetology and others, and can be utilized for them. According to the production method of the invention, in addition, the anode side electrolyzed water and the cathode-side electrolyzed water are produced as their mixture. Therefore, the apparatus for the production may be simplified, different from conventional ones where the electrolyzed water is taken out from one electrode side.

BRIEF DESCRIPTION OF THE DRAWINGS

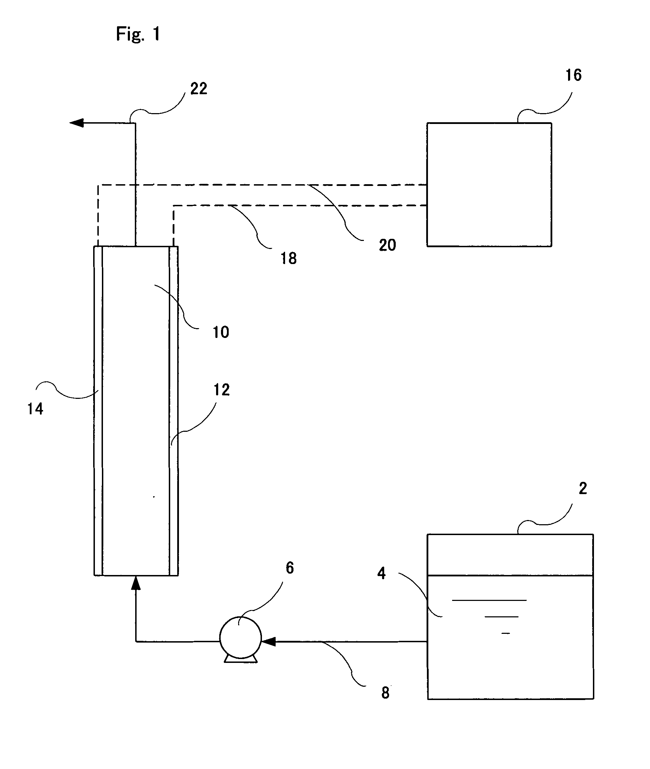

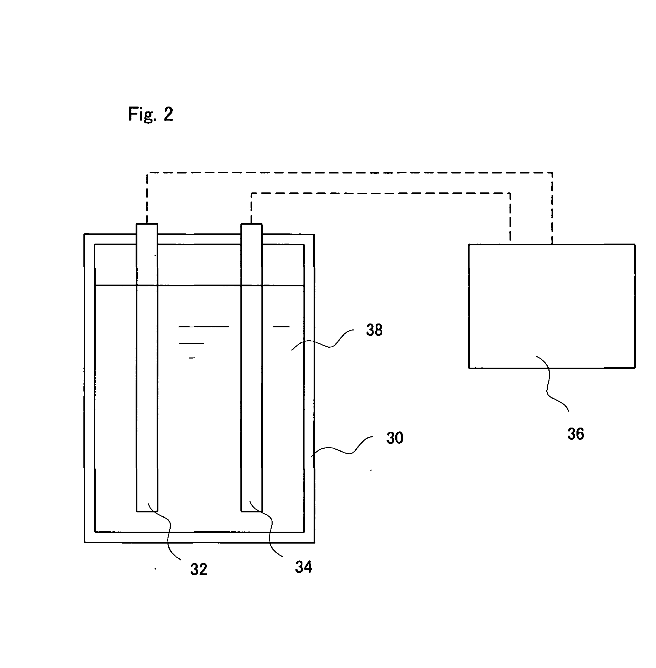

Fig. 1 is an outline schematic view showing one example of a mixed electrolyzed water producing apparatus that is used for the method for producing mixed electrolyzed water of the invention. Fig. 2 is an outline schematic view showing another example of a mixed electrolyzed water producing apparatus that is used for the method for producing mixed electrolyzed water of the invention.

2 is a tank of raw water to be electrolyzed; 4 is an aqueous electrolytic solution; 6 is a pump; 8 is a supply duct for aqueous electrolytic solution; 10 is a non-diaphragm electrolytic cell; 12 and 14 are electrodes; 16 is a power source for electrolysis; 18 and 20 are wirings; 22 is a take-out duct for mixed electrolyzed water; 30 is a non-diaphragm electrolytic cell; 32 and 34 are electrodes; 36 is a power source for electrolysis; 38 is an aqueous electrolytic solution.

BEST MODE FOR CARRYING OUT THE INVENTION

In general, a method for producing electrolyzed water includes a diaphragm process where electrolysis is effected via a diaphragm between two electrodes, and a non-diaphragm process where electrolysis is effected in the absence of a diaphragm. Heretofore, a diaphragm process has been much employed, and there are known only a few examples of employing a non-diaphragm process. The electrolytic method of the invention belongs to the non-diaphragm process, in which oxidized water (mixed electrolyzed water) is produced in the absence of a diaphragm.

When an aqueous electrolytic solution prepared by dissolving an alkali metal chloride (chloride salt) in water is electrolyzed according to such a non-diaphragm process, the following reactions occur around the anode.

$$2H_2O \Leftrightarrow 4H^+ + O_2 + 4e^- \tag{1}$$

$$Cl_2 + H_2O \Leftrightarrow HCl + HOCl \Leftrightarrow HCl + H^+ + OCl^- \tag{2}$$

The following reactions occur around the cathode.

$$2H_2O + 2e^- \Leftrightarrow H_2 + 2OH^- \tag{3}$$

$$Na^+ + OH^- \rightarrow NaOH \tag{4}$$

Further, since no diaphragm is used in the non-diaphragm process, the electrode reaction products formed around the anode and around the cathode reacts to form a salt, according to the following reaction formula.

$$NaOH + HOCl \rightarrow NaOCl \tag{5}$$

In case where the pH of the aqueous electrolytic solution is low, then NaOCl is converted into HOCl and the same compound as that of the electrolyzed product on the anode side in a diaphragm process is formed. In the non-diaphragm process, the electrolyzed water is readily mixed, and therefore the dissolved oxygen formed around the anode and the dissolved hydrogen formed around the cathode are in mixture in the electrolyzed water. According to the Nernst's formula, the oxidation-reduction potential E of the electrolyzed water is represented by the following formula (6).

$$E = 1.63 - 0.0591 \ln[HOCl] - \ln[Cl_2]$$

Though influenced by the concentration of the dissolved oxygen and dissolved hydrogen, the oxidation-reduction potential E is basically represented by formula (6). The oxidation-reduction potential E is at least 1000 mV in terms of the relative potential to a reference electrode (the potential is not converted into the value relative to hydrogen electrode).

Further, when the electrode polarity is alternated, then the electrolyzed product on the anode side and the electrolyzed product on the cathode side can be efficiently mixed. As a result, hypochlorous acid is formed in the electrolyzed water produced according to the present non-diaphragm process, like that in the anode-side electrolyzed water according to a diaphragm process or to a laminar-flow flow non-diaphragm process in which the anode-side electrolyzed water and the cathode-side electrolyzed water are prevented from mixing together.

The free chlorine amount, the pH value and the dissolved oxygen amount that shall be determined depending on the concentration of the solute in the aqueous electrolytic solution may be given in any desired manner by changing the concentration of the solute. However, the increase in water dissociation in the electrolytic solution can be realized through electrolysis alone.

When the energy for electrolysis is the same in a non-diaphragm process and in a diaphragm process, then the water dissociation to increase through electrolysis shall be the same in the two processes. In such a case, therefore, water dissociation may increase in the same manner both in a non-diaphragm process and in a diaphragm process.

Previously adding an inorganic acid to an electrolytic solution makes it possible to determine the pH of the mixed electrolyzed water in arbitrarily. Accordingly, an inorganic acid may be added to the aqueous solution of an electrolyte so that the pH of the mixed electrolyzed water could be on an acid side, and when the electrolytic solution in that condition is subjected to non-diaphragm electrolysis, then hypochlorous acid-containing electrolyzed water of elevated dissociation can be efficiently produced.

In the invention, an aqueous electrolytic solution that contains a chloride salt and an inorganic acid as solutes is electrolyzed with an electrodes spaced from each other by at most 2 mm, and the resulting anode-side electrolyzed water and cathode-side electrolyzed water are mixed to give mixed electrolyzed water. Thus obtained, the mixed electrolyzed water is one where hypochlorous acid and water dissociation is enhanced, and this can be utilized for various applications such as sterilization, disinfection, skin care, etc.

Fig. 1 is an outline view showing one example of an electrolytic apparatus to be used for the method for producing mixed electrolyzed water of the invention.

In Fig. 1, 2 is a tank for raw water to be electrolyzed, and an aqueous electrolytic solution (raw water to be electrolyzed) 4 is stored therein.

The aqueous electrolytic solution 4 contains, as electrolytes, from 0.5 to 100 mM, preferably from 5 to 50 mM of a chloride salt, and from 0.1 to 5 mM, preferably from 0.5 to 3 mM of an inorganic acid. If the concentration of the chloride salt is lower than 0.1 mM, then the conductivity of the solution is low and the electrolysis will be difficult. If the concentration of the chloride salt is higher than 100 mM, the mixed electrolyzed water obtained will be sticky when applied to the skin and the like for sterilization, and it will be inconvenient to some applications.

The chloride salt is preferably an alkali metal or alkaline earth metal chloride. Concretely, its examples are sodium chloride, potassium chloride, calcium chloride, and magnesium chloride.

Examples of the inorganic acid are hydrochloric acid, sulfuric acid, nitric acid, and phosphoric acid.

For preparing the aqueous electrolytic solution 4, for example, there is mentioned a method of dissolving a chloride salt and an inorganic acid in tap water, well water or purified water (pure water) such as distilled water or deionized water, within the above-mentioned concentration ranges.

6 is a pump disposed in the course of the aqueous electrolytic solution supply duct 8. By driving the pump 6, the aqueous electrolytic solution 4 is fed to the non-diaphragm electrolytic cell 10 through the supply duct 8.

The non-diaphragm electrolytic cell 10 has therein a pair of electrodes 12 and 14 that face each other while spaced via a predetermined distance. The distance between the pair of electrodes 12 and 14 is at most 2 mm, preferably from 0.05 to 1.5 mm, more preferably from 0.1 to 1.0 mm. If the electrode-to-electrode distance is over 2 mm, then the anode-side electrolyzed water and the cathode-side electrolyzed water formed through electrolysis could not be well mixed together. As a result, the mixed electrolyzed water obtained could not ensure satisfactorily increased dissociation of hypochlorous acid and water, and the antimicrobial activity and the microbicidal activity of the mixed electrolyzed water will be poor.

If a diaphragm exists between the two electrodes 12 and 14 in the electrolytic cell 10, it is also unfavorable since the anode-side electrolyzed water and the cathode-side electrolyzed water formed through electrolysis could not be well mixed together.

The electrodes 12 and 14 are formed of an electrochemically-inert metal material. For the electrode material, preferred are platinum and platinum alloys. In the above description, one pair of electrodes is in the cell, to which, however, the invention should not be limited. Plural pairs of electrodes may be disposed in the electrolytic cell to increase the electrolysis efficiency.

16 is a power source for electrolysis, and its plus terminal and minus terminal are connected to the two electrodes 12 and 14 via wirings 18 and 20, respectively. The polarity of the electric power to be applied to the two electrodes shall be alternated at predetermined time intervals. By alternating the polarity of the electric power to be applied at predetermined time intervals, the cathode-side electrolyzed water and the anode-side electrolyzed water are alternately formed around one electrode, and therefore, the anode-side electrolyzed water and the cathode-side electrolyzed water may be efficiently mixed together. The frequency of polarity alternation is preferably from 2 to 1200/min, more preferably from 120 to 600/min. The polarity alternation is effective for preventing scale deposition on the electrodes.

The aqueous electrolytic solution 4 fed to the non-diaphragm electrolytic cell 10 through the aqueous electrolytic solution supply duct 8 is electrolyzed in the cell. The current density for electrolysis is preferably from 0.003 to 0.03 A/cm$^2$, more preferably from 0.01 to 0.02 A/cm$^2$. If the current density for electrolysis is lower than 0.003 A/cm$^2$, then the dissociation of hypochlorous acid and water in the mixed electrolyzed water obtained could not be satisfactorily high. If, however, the current density for electrolysis is higher than 0.03 A/cm$^2$, then it is uneconomical since the dissociation of hypochlorous acid and water in the mixed electrolyzed water obtained could not increase in proportion to the current value.

Accordingly, the current density for electrolysis is controlled to fall within the above-mentioned range, and the dissociation of hypochlorous acid or water in the mixed electrolyzed water that flows out from the electrolytic cell can be increased at least 1.1 times, preferably at least 1.25 times that before electrolysis.

Through electrolysis in the manner as above, the anode-side electrolyzed water and the cathode-side electrolyzed water formed in the electrolytic cell during electrolysis are naturally mixed, and the resulting mixed electrolyzed water of the two is continuously taken out externally via the mixed electrolyzed water take-out duct 22.

Fig. 2 shows another example of an electrolytic apparatus. In this example, an aqueous electrolytic solution is not continuously fed into the electrolytic cell. In Fig. 2, 30 is a non-diaphragm electrolytic cell, and a pair of electrodes 32 and 34 are disposed therein in parallel to face each other. 36 is a power source for electrolysis, and it supplies electric power for electrolysis to the electrodes 32 and 34. The electrolytic cell is filled with an aqueous electrolytic solution 38 , and this is electrolyzed by supplying electric power to the two electrodes 32 and 34 from the power source 36. The detail of the constitution is the same as hereinabove, and its description is omitted.

EXAMPLES

The invention is described more concretely with reference to the following Examples.

Example 1:

An aqueous electrolytic solution was electrolyzed by the use of the electrolytic apparatus shown in Fig. 2.

A pair of electrodes of 10 × 10 cm titanium coated with platinum were set in an electrolytic cell. The distance between the two electrodes was 2 mm. The electrolytic cell is a rectangular parallelepiped having a length of 15 cm, a width of 10 cm and a height of 13 cm. An aqueous sodium chloride solution having a concentration of 40 mM was prepared, and the hydrochloric acid concentration was adjusted to 3.3 mM. 1500 ml of the solution was filled into the electrolytic cell. With stirring the aqueous electrolytic solution, a current of 3.5 A was applied to the two electrodes to electrolyze it. At intervals of 30 seconds from the start of electrolysis, the polarity of the voltage to be applied to the electrodes was alternated to effect electrolysis. The pH,the oxidation-reduction potential(ORP), the dissolved oxygen (DO), and the electroconductivity (EC) of the mixed electrolyzed water formed through electrolysis are shown in Table 1.

Table 1

| Time of Electrolysis (sec) | 0 | 30 | 60 | 90 |
|---|---|---|---|---|
| PH | 2.49 | 2.50 | 2.53 | 2.53 |
| ORP(mV) | 466 | 1010 | 1015 | 1020 |
| DO (mg/L) | 7.54 | 7.63 | 7.92 | 8.11 |
| EC (mS/m) | 0.456 | 0.582 | 0.599 | 0.615 |

From Table 1, it is understood that ORP increases with the lapse of the time of electrolysis, and this means the increase in free chlorine. In addition, it is also understood that pH changes little from the time of 0 second (raw water) but DO gradually increases. Further, it is understood that EC gradually increases with the lapse of time of electrolysis. The potential ORP as referred to herein is the potential at the reference electrode, platinum electrode.

Bactericidal Test Example 1:

Using the electrolytic apparatus of Example 1, a bactericidal test of killing general bacteria and *E. coli* was carried out. An aqueous sodium chloride solution having the same concentration (40 mM) as in Example 1 was prepared, and this was used as raw water herein. The number of *E. coli* cells and that of general bacteria in the raw water were counted, and the data are shown in Table 2.

Next, hydrochloric acid was added to the raw water to make it have a hydrochloric acid concentration of 3.3 mM, and then the number of *E. coli* cells and that of general bacteria therein were counted. The data are the number of bacteria at the time of 0 second of electrolysis, and are shown in Table 2.

After this, the electrolysis was continued while the polarity was alternated at intervals of 30 seconds, and the number of bacteria was counted. The data are shown in Table 2.

Table 2

|  | Number of *E. Coli* Cells | Number of General Bacteria |
|---|---|---|
| Raw Water (with NaCl) | $>10^7$ | $>10^6$ |
| Electrolysis Time 0 second | $1.6 \times 10^2$ | $3 \times 10^2$ |
| Electrolysis Time 30 seconds | 30 | 20 |
| Electrolysis Time 60 seconds | 0 | 0 |
| Electrolysis Time 90 seconds | 0 | 0 |

In the raw water (containing NaCl alone), few *E. coli* cells and general bacteria were killed. When hydrochloric acid was added to the raw water to make it have a pH of 2.49, then the number of *E. coli* cells and that of general bacteria reduced to less than $10^3$ (electrolysis time 0 second), but the bactericidal effect was still unsatisfactory. Next, when the electrolysis was carried out for 30 seconds, the number of *E. coli* cells and that of general bacteria reduced to 30 and 20, respectively (electrolysis time 30 seconds). However, the number of bacteria could not still be 0. Next, the polarity was changed, and the number of bacteria became 0 (electrolysis time 60 seconds, 90 seconds) though the chlorine concentration was the same. This means that the polarity alternation significantly increased the bactericidal effect.

**Claims**

1. A method for producing mixed electrolyzed water of cathode-side electrolyzed water and anode-side electrolyzed water by supplying an aqueous electrolytic solution that contains a chloride salt and an inorganic acid to a non-diaphragm electrolytic cell that has at least a pair of inert electrodes having an electrode-to-electrode distance of at most 2 mm, and electrolyzing it, which is **characterized in that** the polarity of the electric power to be supplied between at least the pair of inert electrodes is alternated at least 2 times or more per minute.

2. The method for producing mixed electrolyzed water as claimed in claim 1 , wherein the chloride salt is sodium chloride, potassium chloride, calcium chloride or magnesium chloride.

3. The method for producing mixed electrolyzed water as claimed in claim 1, wherein the inorganic acid is hydrochloric acid, sulfuric acid, nitric acid or phosphoric acid.

Fig. 1

Fig. 2

<div style="text-align:center">**INTERNATIONAL SEARCH REPORT**</div>

| | International application No. |
|---|---|
| | PCT/JP2004/002639 |

**A. CLASSIFICATION OF SUBJECT MATTER**
Int.Cl$^7$ C02F1/461, 1/467

According to International Patent Classification (IPC) or to both national classification and IPC

**B. FIELDS SEARCHED**

Minimum documentation searched (classification system followed by classification symbols)
Int.Cl$^7$ C02F1/461, 1/467

Documentation searched other than minimum documentation to the extent that such documents are included in the fields searched
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| Y | EP 470841 A2 (OMCO CO., LTD.), 12 February, 1992 (12.02.92), Page 7, lines 10 to 15; Fig. 1 & JP 4-94785 A & JP 6-99174 A & KR 156000 B1 & TW 270921 B | 1-3 |
| Y | JP 63-16093 A (Katsumi ISHII), 23 January, 1998 (23.01.98), Full text (Family: none) | 1 |
| A | EP 792584 A1 (TOTO LTD.), 03 September, 1997 (03.09.97), Page 17, lines 37 to 43 & WO 96/3881 A1 & US 5858201 A & CN 1162247 A & KR 97704353 A & TW 436468 B | 1 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 April, 2004 (15.04.04) | 11 May, 2004 (11.05.04) |

| Name and mailing address of the ISA/ Japanese Patent Office | Authorized officer |
|---|---|
| Facsimile No. | Telephone No. |

Form PCT/ISA/210 (second sheet) (January 2004)

**EP 1 602 629 A1**

<table>
<tr><td colspan="2">INTERNATIONAL SEARCH REPORT</td><td>International application No.<br>PCT/JP2004/002639</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-219463 A  (Mitsubishi Plastics, Inc.),<br>06 August, 2002 (06.08.02),<br>Column 2, lines 36 to 37; column 4, line 8<br>(Family: none) | 1 |

Form PCT/ISA/210 (continuation of second sheet) (January 2004)

10